# EUROPÄISCHE PATENTSCHRIFT

(11) **EP 4 124 268 B1**
(45) Veröffentlichungstag und Bekanntmachung des Hinweises auf die Patenterteilung: **20.08.2025**
(21) Anmeldenummer: 22179115.5
(22) Anmeldetag: 15.06.2022
(51) Int. Cl.: A47J 31/44, A47J 31/58

(54) **VERFAHREN ZUM BETREIBEN EINES HEISSGETRÄNKEAUTOMATEN UND HEISSGETRÄNKEAUTOMAT**
METHOD FOR OPERATING A HOT DRINKS MACHINE AND HOT DRINKS MACHINE
PROCÉDÉ PERMETTANT DE FAIRE FONCTIONNER UN DISTRIBUTEUR DE BOISSONS CHAUDES ET DISTRIBUTEUR DE BOISSONS CHAUDES

(30) Priorität: 26.07.2021 DE 102021119231
(43) Veröffentlichungstag der Anmeldung: 01.02.2023
(73) Patentinhaber: Miele & Cie. KG, 33332 Gütersloh (DE)
(72) Erfinder: Tembaak, Jutta, 49492 Westerkappeln (DE); Janson, Thomas, 33332 Gütersloh (DE)

(56) Entgegenhaltungen:
- WO-A1-2014/169447
- WO-A1-2019/180252
- CN-A- 111 568 212

## Beschreibung

Die Erfindung betrifft ein Verfahren zum Betreiben eines Heißgetränkeautomaten, eine Steuereinrichtung und einen Heißgetränkeautomaten gemäß den Hauptansprüchen.

Beim Stand-Kaffeevollautomaten kann neben das Gerät ein Milchbehälter, wie zum Beispiel ein beschichtete Papierverpackung oder eine Edelstahl-Kanne, gestellt werden. Von einem Auslauf kann ein Schlauch abführen, der die Milch ansaugen kann. Im Auslauf kann die Milch mit heißem Dampf aus dem Gerät vermischt werden, um Milchschaum zu erzeugen. In der DE 10 2016 107 086 A1 wird die Befüllung eines Trinkgefäßes mittels Kamera überwacht. Hierbei wird die Ausgabemenge beziehungsweise der Füllstand im Trinkgefäß erfasst.

Aus der WO 2019/180 252 A1 ist ein Getränkebereiter bekannt, der eine Kameraeinrichtung an einem Ausgabebereich angeordnet und ausgebildet ist, um Bilder des Ausgabebereichs aufzunehmen, um einen am durchgeführten Vorgang zu erfassen.

Der Erfindung stellt sich die Aufgabe ein verbessertes Verfahren zum Betreiben eines Heißgetränkeautomaten, eine verbesserte Steuereinrichtung und einen verbesserten Heißgetränkeautomat zu schaffen.

Erfindungsgemäß wird diese Aufgabe durch ein Verfahren zum Betreiben eines Heißgetränkeautomaten, eine Steuereinrichtung und einen Heißgetränkeautomaten mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem Erfassen von Störungen bei der Ausgabe von Getränken in einem Erkennen eines leeren Milchbehälters und gegebenenfalls Anhalten eines Vorgangs zum Milchschäumen. Dadurch kann eine Extrembedampfung des Gerätes und damit einhergehende Beschädigung der Elektronik vermieden werden. Zudem kann verhindert werden, dass sich Personen durch unkontrollierten heißen Dampf verbrennen.

Es wird ein Verfahren zum Betreiben eines Heißgetränkeautomaten mit einer Milchschaumerzeugungseinrichtung zum Erzeugen von Milchschaum vorgestellt, wobei das Verfahren folgende Schritte umfasst:
Erfassen eines Vorgangs an einem Ausgabebereich des Heißgetränkeautomaten mittels einer Kameraeinrichtung, die am Ausgabebereich angeordnet und ausgebildet ist, um Bilder des Ausgabebereichs aufzunehmen,

Ausgeben eines Kamerasignals an eine Steuereinrichtung, wobei das Kamerasignal einen am Ausgabebereich durchgeführten Vorgang repräsentiert und

Bereitstellen eines Abschaltsignals zum Abschalten der Milchschaumerzeugungseinrichtung ansprechend auf das Kamerasignal, wenn das Kamerasignal einen Dampfzustand repräsentiert oder abbildet, in dem ein Referenzpunkt des Ausgabebereichs von der Kameraeinrichtung nicht mehr erfassbar und/oder erkennbar ist.

Bei dem Heißgetränkeautomaten kann es sich zum Beispiel um einen Kaffeevollautomaten handeln, der für die Zubereitung verschiedener Heißgetränke, wie zum Beispiel Cappuccino, eine Einrichtung zum Schäumen von Milch umfasst. Dabei kann beispielsweise auch anstelle der Milch ein Milchersatzprodukt verwendet werden, beispielsweise eine Flüssigkeit basierend auf Soja, Mandeln oder Hafer. Zum Erzeugen von Milchschaum kann zum Beispiel neben das Gerät ein Tetrapack oder eine Edelstahl-Kanne gestellt werden. Von einem Auslauf des Heißgetränkeautomaten kann ein Schlauch abführen, mit dem die Milch beispielsweise über das Venturi-Prinzip angesaugt werden kann. Im Auslauf kann die Milch mit heißem Dampf aus dem Gerät vermischt werden. Das Dampf-Milch-Gemisch kann zum Beispiel über Auslaufdüsen in ein unter dem Auslauf angeordnetes Gefäß, wie beispielsweise eine Tasse, geführt werden. Die Menge des Milchschaumbezuges kann beispielsweise über die Zeit geregelt werden. Diese kann beispielsweise ein Nutzer individuell einstellen, zum Beispiel für die Dauer von 1,5 Minuten. Bei dem hier vorgestellten Heißgetränkeautomaten wird der Vorgang des Milchschaumbezugs oder auch die Ausgabe von Getränken am Ausgabebereich, beispielsweise ein Bereich unter dem Auslauf, erfasst. Beim Milchschaumbezug entsteht Dampf einer gleichmäßigen Wolke, durch die eine Kamera der Kameraeinrichtung noch durchsehen kann. Dahinter liegende Gegenstände, wie beispielsweise eine Tasse, sind noch unscharf zu erkennen. Sobald die Milch leer ist, wird die Dampfwolke deutlich ungleichmäßiger und vor allem undurchsichtiger. Sobald die Kamera nicht mehr hindurchsehen kann, ist dieser Zustand erreicht, der hier als Dampfzustand bezeichnet wird und der mittels des Kamerasignals an die Steuereinrichtung übermittelt wird. Die Steuereinrichtung, die auch als Gerätesteuerung bezeichnet werden kann, stoppt beispielsweise umgehend den Vorgang des Milchschaumbezugs, beispielsweise indem eine Pumpe abgeschaltet wird. Der gleiche oder ein ähnlicher Prozess erfolgt auch, wenn die Milch beispielsweise zu heiß wird. Zu heiße Milch lässt sich nicht mehr aufschäumen, da das Eiweiß denaturiert. Aus den Düsen kann es dann genauso spritzen und dampfen wie bei einem leerem Milchgefäß. Zusätzlich kann es verbrannt riechen und schmecken und der Milchschaum kann umgehend zusammenfallen. Mit dem hier vorgestellten Verfahren wird vorteilhafterweise vom Gerät automatisch erkannt, wenn der Milchbehälter leer ist, während die Zubereitungszeit noch nicht abgelaufen ist. Dadurch kann verhindert werden, dass nur noch Luft und Dampf miteinander vermischt werden und es aus dem Auslauf dampft und spritzt und beispielsweise extrem laut wird. Der Vorgang wird dementsprechend auch dann unterbrochen, wenn keine Person in der Nähe ist, um den Vorgang manuell zu unterbrechen. Damit kann verhindert werden, dass das gesamte Gerät unter Dampf gesetzt wird und im Anschluss regelrecht trocken gelegt werden sollte. So kann vorteilhafterweise eine Beschädigung der Elektronik durch die Bedampfung verhindert werden und zudem kann vermieden werden, dass sich zum Beispiel Kinder, die sich zum Beispiel zu diesem Zeitpunkt unbeaufsichtigt in der Nähe des Gerätes befinden können, durch den Dampf verbrennen.

Gemäß einer Ausführungsform kann im Schritt des Bereitstellens ein Warnsignal zum Aktivieren einer Warnmeldung bereitgestellt werden, wenn das Kamerasignal den Dampfzustand repräsentiert oder abbildet. Die Warnmeldung kann beispielsweise in Form einer aktivierten Leuchteinheit oder eines Einblendens eines Schriftzugs auf einem Display des Heißgetränkeautomaten erfolgen. Zusätzlich oder alternativ kann die Steuereinrichtung ausgebildet sein, um eine kabellose Verbindung, beispielsweise mittels WLAN oder Bluetooth, mit einem Mobilgerät eines Nutzers herzustellen. So kann zum Beispiel eine entsprechende Nachricht an das Mobilgerät geschickt werden, wenn der zum Beispiel undurchsichtige Milchbehälter leer ist. Vorteilhafterweise kann ein Nutzer des Heißgetränkeautomaten dadurch schnell informiert werden, wenn ein Eingreifen am Heißgetränkeautomaten erforderlich ist.

Gemäß einer Ausführungsform kann im Schritt des Erfassens ein Getränkestrahl erfasst werden. Dabei kann im Schritt des Bereitstellens ein Reinigungssignal zum Reinigen des Ausgabebereichs bereitgestellt werden, wenn der Getränkestrahl von einer erwarteten Form abweicht. Beispielsweise kann die erwartete Form ein gleichmäßiger Getränkestrahl sein, der von einem Auslauf senkrecht nach unten in eine Tasse geführt wird. Wenn zum Beispiel der Auslauf blockiert ist, zum Beispiel durch Schmutz oder Kalkablagerungen, dann kann der Getränkestrahl von einer solchen erwarteten Form abweichen. Eine solche Veränderung kann von der Kameraeinrichtung erfasst werden und von der Steuereinrichtung kann ein entsprechendes Reinigungssignal bereitgestellt werden. Dabei kann das Reinigungssignal zum Beispiel ein automatisches Reinigen des Heißgetränkeautomaten veranlassen oder beispielsweise eine Aufforderung zum manuellen Reinigen, beispielsweise mittels eines Displays, an einen Nutzer bereitstellen. Vorteilhafterweise können dadurch Verunreinigungen im Ausgabebereich schnell erfasst und behoben werden.

Gemäß einer Ausführungsform kann das Reinigungssignal bereitgestellt werden, wenn ein tröpfelnder Getränkestrahl erfasst wird. Beispielsweise kann von der Kameraeinrichtung erfasst werden, dass der Getränkestrahl nicht mehr gleichmäßig fließt, sondern mit Unterbrechungen, das heißt tröpfelnd. Vorteilhafterweise kann in einem solchen Fall ein Reinigungssignal bereitgestellt werden, um eine mögliche Blockade im Ausgabebereich schnell zu beseitigen.

Gemäß einer Ausführungsform kann das Reinigungssignal bereitgestellt werden, wenn der erfasste Getränkestrahl von einer vorgegebenen und/oder erwarteten Fließrichtung abweicht.

Beispielsweise kann die Kameraeinrichtung erfassen, dass der Getränkestrahl von einer erwarteten Fließrichtung, beispielsweise senkrecht nach unten, abweicht und zum Beispiel in einer im Vergleich zur erwarteten Fließrichtung schiefe Fließrichtung erfolgt. Vorteilhafterweise kann in einem solchen Fall ein Reinigungssignal bereitgestellt werden, um eine mögliche Blockade im Ausgabebereich schnell zu beseitigen.

Gemäß einer Ausführungsform kann im Schritt des Erfassens ein weiterer Ausgabebereich des Heißgetränkeautomaten mittels der Kameraeinrichtung erfasst werden. Dabei kann im Schritt des Ausgebens das Kamerasignal einen am Ausgabebereich und zusätzlich oder alternativ am weiteren Ausgabebereich durchgeführten Vorgang repräsentieren und im Schritt des Bereitstellens kann das Abschaltsignals bereitgestellt werden, wenn das Kamerasignal den Dampfzustand repräsentiert oder abbildet, in dem der Referenzpunkt des Ausgabebereichs und zusätzlich oder alternativ ein weiterer Referenzpunkt des weiteren Ausgabebereichs von der Kameraeinrichtung nicht mehr erfassbar und/oder erkennbar ist. Beispielsweise kann der Heißgetränkeautomaten zwei Ausgabebereiche umfassen, in denen parallel zwei Heißgetränke ausgegeben beziehungsweise zubereitet werden können. Die Kameraeinrichtung kann beispielsweise mittig zwischen den beiden Ausgabebereichen angeordnet sein und ausgebildet sein, um beide Ausgabebereiche, beziehungsweise zum Beispiel zwei in den Ausgabebereichen angeordnete Tassen, gleichzeitig zu erfassen. Wenn zum Beispiel in einem der beiden Ausgabebereiche oder auch gleichzeitig in beiden Ausgabebereichen ein Dampfzustand erfasst wird, beispielsweise aufgrund eines leeren Milchbehälters, kann das Abschaltsignal zum Abschalten der Milchschaumerzeugungseinrichtung bereitgestellt werden. Vorteilhafterweise kann dadurch eine Mehrzahl parallel durchgeführter Vorgänge zum Zubereiten von Heißgetränken überwacht werden.

Gemäß einer Ausführungsform kann im Schritt des Bereitstellens ein Korrektursignal zum Korrigieren mindestens eines Brühparameters bereitgestellt werden, wenn der von der Kamera erfasste Getränkestrahl und ein im weiteren Ausgabebereich erfasster weiterer Getränkestrahl von einer erwarteten Form abweichen. Beispielsweise kann die Kameraeinrichtung erfassen, dass der Getränkestrahl nur tröpfelt. Wenn dies in nur einem Ausgabebereich erfasst wird, kann zum Beispiel ein Hinweis an einen Nutzer ausgegeben werden, dass der Auslauf gereinigt werden sollte. Wenn zum Beispiel ein gleichzeitiges Tröpfeln in beiden Ausgabebereichen erfasst wird, so kann das ein auf einen Mangel an Wasser oder eine fehlerhafte Einstellung von Mahlmenge oder Mahlgrad zurückzuführen sein. In diesem Fall kann vorteilhafterweise das Korrektursignal bereitgestellt werden, um diese Parameter manuell überprüfen zu lassen oder direkt automatisch zu korrigieren.

Der hier vorgestellte Ansatz schafft ferner eine Steuereinrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Steuereinrichtung kann die der Erfindung zugrunde liegende Aufgabe schnell und effizient gelöst werden.

Die Steuereinrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Steuereinrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Zudem wird ein Heißgetränkeautomat mit einer Milchschaumerzeugungseinrichtung zum Erzeugen von Milchschaum vorgestellt, wobei der Heißgetränkeautomat eine Kameraeinrichtung aufweist, die am Ausgabebereich zum Ausgeben eines Getränkestrahls angeordnet und ausgebildet ist, um Bilder des Ausgabebereichs aufzunehmen. Dabei ist die Kameraeinrichtung ausgebildet, um einen am Ausgabebereich durchgeführten Vorgang zu erfassen und ein den Vorgang repräsentierendes Kamerasignal bereitzustellen. Zudem umfasst der Heißgetränkeautomat eine Steuereinrichtung, die ausgebildet ist, um ansprechend auf das Kamerasignal ein Abschaltsignal zum Abschalten der Milchschaumerzeugungseinrichtung bereitzustellen, wenn das Kamerasignal einen Dampfzustand repräsentiert oder abbildet, in dem ein Referenzpunkt des Ausgabebereichs von der Kameraeinrichtung nicht mehr erfassbar und/oder erkennbar ist.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einer Steuereinrichtung eines Heißgetränkeautomaten ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Heißgetränkeautomaten gemäß einem Ausführungsbeispiel;
- Figur 2: ein Ablaufdiagramm eines Ausführungsbeispiels eines Verfahrens zum Betreiben eines Heißgetränkeautomaten;
- Figur 3: eine schematische Darstellung eines Heißgetränkeautomaten gemäß einem Ausführungsbeispiel;
- Figur 4: eine schematische Darstellung einer Milchschaumerzeugungseinrichtung gemäß einem Ausführungsbeispiel;
- Figur 5: eine schematische Darstellung einer Milchschaumerzeugungseinrichtung gemäß einem Ausführungsbeispiel;
- Figur 6: eine schematische Darstellung einer Milchschaumerzeugungseinrichtung gemäß einem Ausführungsbeispiel; und
- Figur 7: ein Diagramm eines Ausführungsbeispiels eines Vorgangs des Zubereitens von Milchschaum.

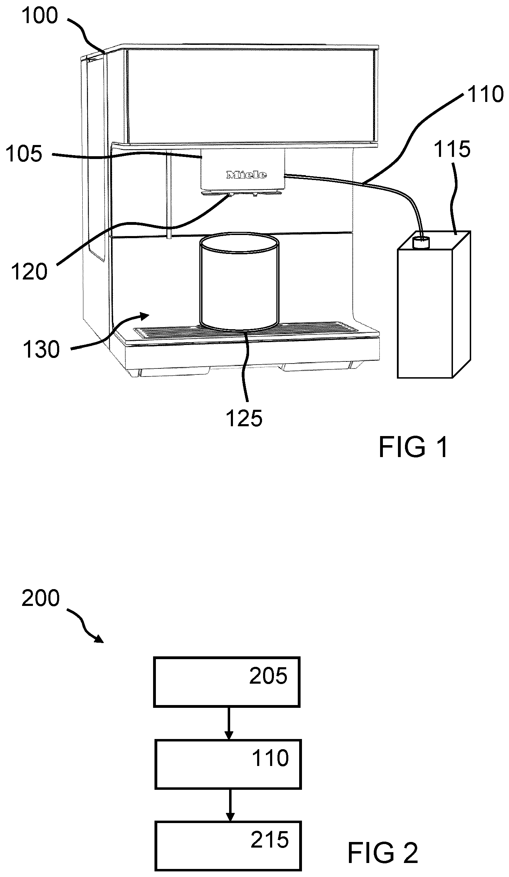

Figur 1 zeigt eine schematische Darstellung eines Heißgetränkeautomaten 100 gemäß einem Ausführungsbeispiel. Lediglich beispielhaft handelt es sich bei dem hier gezeigten Heißgetränkeautomat 100 um einen Stand-Kaffeevollautomaten. Der Heißgetränkeautomaten 100 umfasst in diesem Ausführungsbeispiel eine Milchschaumerzeugungseinrichtung 105 zum Erzeugen von Milchschaum. Hierfür ist die Milchschaumerzeugungseinrichtung 105 über einen Schlauch 110 mit einem Milchbehälter 115 verbunden, bei dem es sich lediglich beispielhaft um eine kunststoffbeschichtete Papierverpackung wie ein Tetrapack-Paket handelt. Milchschaumerzeugungseinrichtung 105 ist in diesem Ausführungsbeispiel ausgebildet, um Milch aus dem Milchschaumbehälter 115 über das Venturi-Prinzip an zu saugen und mit heißem Dampf zu vermischen. Das Dampf-Milch-Gemisch ist lediglich beispielhaft über die Auslaufdüsen 120 in ein Gefäß 125 führbar, bei dem es sich in diesem Ausführungsbeispiel um eine Tasse handelt. Hierfür ist das Gefäß 125 in einem Ausgabebereich 130 unter den Auslaufdüsen 120 angeordnet. Dabei ist die Menge des Milchschaumbezuges lediglich beispielhaft über Zeit regelbar. Diese ist manuell einstellbar und weist in diesem Ausführungsbeispiel eine Dauer von bis zu 1,5 Minuten auf. In diesem Ausführungsbeispiel ist vom Heißgetränkeautomaten 100 nicht erfassbar, ob der Milchbehälter 115 eine Flüssigkeit enthält oder leer ist. Ist der Milchbehälter 115 leer und die Zubereitungszeit noch nicht abgelaufen, entsteht eine Mischung aus Luft und Dampf. Das führt dazu, dass es aus im Ausgabebereich 130 dampft und spritzt und extrem laut wird. Ist keine Person in der Nähe, um den Vorgang zu unterbrechen, wird das gesamte Gerät unter Dampf gesetzt, was zu einer Beschädigung der Elektronik führt.

Figur 2 zeigt ein Ablaufdiagramm eines Ausführungsbeispiels eines Verfahrens 200 zum Betreiben eines Heißgetränkeautomaten mit einer Milchschaumerzeugungseinrichtung zum Erzeugen von Milchschaum. Das Verfahren 200 umfasst einen Schritt 205 des Erfassens eines Vorgangs an einem Ausgabebereich des Heißgetränkeautomaten mittels einer Kameraeinrichtung, die am Ausgabebereich angeordnet und ausgebildet ist, um Bilder des Ausgabebereichs aufzunehmen. Lediglich beispielhaft handelt es sich bei dem erfassbaren Vorgang um eine beim Erzeugen von Milchschaum entstehende Dampfwolke. In einem anderen Ausführungsbeispiel kann auch ein ausgegebener Getränkestrahl erfasst werden. Der Vorgang wird von der Kameraeinrichtung erfasst und im Schritt 210 des Ausgebens mittels eines Kamerasignals an eine Steuereinrichtung des Heißgetränkeautomaten übermittelt. Dabei repräsentiert das Kamerasignal den am Ausgabebereich durchgeführten Vorgang. Im Schritt 215 des Bereitstellens wird beispielsweise ansprechend auf das Kamerasignal ein Abschaltsignal bereitgestellt, um die Milchschaumerzeugungseinrichtung abzuschalten, wenn das Kamerasignal einen Dampfzustand repräsentiert, in dem ein Referenzpunkt des Ausgabebereichs von der Kameraeinrichtung nicht mehr erfassbar ist. In diesem Ausführungsbeispiel handelt es sich bei dem Referenzpunkt um ein im Ausgabebereich angeordnetes Gefäß zum Aufnehmen des Milchschaums. Mit anderen Worten lässt sich das Verfahren wie folgt beschreiben. Beim normalen Milchschaumbezug entsteht Dampf in einer gleichmäßigen Wolke, durch die die Kamera noch durchsehen kann. Dahinter liegende Gegenstände sind noch unscharf zu erkennen. Sobald die Milch in dem Milchgefäß leer ist, wird die Dampfwolke deutlich ungleichmäßiger und vor allem undurchsichtiger. Sobald die Kamera nicht mehr hindurchsehen kann, gibt sie ein Signal an die Gerätesteuerung. Diese schaltet die Pumpe umgehend ab, wodurch der Milchschaumbezug gestoppt wird. So wird ein leeres Milchgefäß erkannt und der Bezug umgehend gestoppt. Dadurch kommt es nicht zu einer Extrembedampfung des Gerätes, was auch die Elektronik beschädigen könnte. Auch besteht nicht die Gefahr, dass sich Personen durch den unkontrollierten heißen Dampf verbrennen. In diesem Ausführungsbeispiel wird im Schritt 215 des Bereitstellens zudem ein Warnsignal zum Aktivieren einer Warnmeldung bereitgestellt, wenn das Kamerasignal den Dampfzustand repräsentiert. Dabei wird lediglich beispielhaft eine Nachricht an einen Nutzer ausgegeben, dass das Milchgefäß leer ist. In einem anderen Ausführungsbeispiel kann weiterhin im Schritt des Erfassens ein Getränkestrahl erfasst werden, wobei im Schritt des Bereitstellens ein Reinigungssignal zum Reinigen des Ausgabebereichs bereitgestellt werden kann, wenn der Getränkestrahl von einer erwarteten Form abweicht. Zusätzlich oder alternativ kann im Schritt des Bereitstellens ein Korrektursignal zum Korrigieren mindestens eines Brühparameters bereitgestellt werden, wenn der von der Kamera erfasste Getränkestrahl und ein in einem weiteren Ausgabebereich erfasster weiterer Getränkestrahl von einer erwarteten Form abweichen.

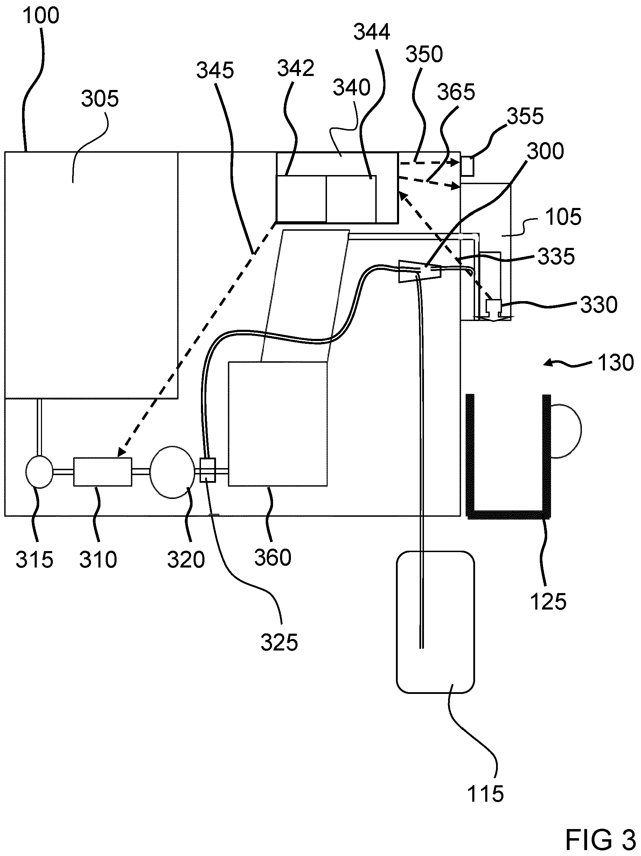

Figur 3 zeigt eine schematische Darstellung eines Heißgetränkeautomaten 100 gemäß einem Ausführungsbeispiel. Der hier dargestellte Heißgetränkeautomat 100 entspricht oder ähnelt dem in der vorangegangenen Figur 1 beschriebenen Heißgetränkeautomaten, mit dem

Unterschied, dass ein Verfahren, wie es in der vorangegangenen Figur 2 beschrieben wurde, mit dem hier dargestellten Heißgetränkeautomat 100 durchführbar ist. Der Heißgetränkeautomat 100 umfasst eine Milchschaumerzeugungseinrichtung 105 zum Erzeugen von Milchschaum. Hierfür ist die Milchschaumerzeugungseinrichtung 105 lediglich beispielhaft über einen Schlauch 110 mit einem Milchbehälter 115 verbunden, bei dem sich in diesem Ausführungsbeispiel um eine Edelstahl-Kanne handelt. Dabei ist die Milchschaumerzeugungseinrichtung 105 ausgebildet, um Flüssigkeit aus dem Milchbehälter 115 über ein Venturirohr 300 anzusaugen. Zudem umfasst der Heißgetränkeautomaten 100 einen Wassertank 305 zum Speichern von Wasser und ist ausgebildet, um Wasser aus dem Wassertank 305 mittels einer Pumpe 310 über ein Flowmeter bzw. ein Durchflussmessgerät 315, einen Heizkörper 320 und eine Ventileinheit 325 zu pumpen. Dabei ist das Wasser mittels des Heizkörpers 320 erhitzbar und der hierbei entstehende Wasserdampf ist durch die Milchschaumerzeugungseinrichtung 105 mit aus dem Milchbehälter 115 bezogenen Milch vermischbar, um Milchschaum zu erzeugen.

Der Heißgetränkeautomat 100 weist zudem eine Kameraeinrichtung 330 auf, die am Ausgabebereich 130 angeordnet und ausgebildet ist, um Bilder des Ausgabebereichs 130 aufzunehmen. Dabei ist die Kameraeinrichtung 330 ausgebildet, um einen am Ausgabebereich 130 durchgeführten Vorgang zu erfassen und ein den Vorgang repräsentierendes Kamerasignal 335 an eine Steuereinrichtung 340 des Heißgetränkeautomaten 100 bereitzustellen. Die Steuereinrichtung 340 umfasst einen Prozessor 342 und einen Speicher 344 und ist ausgebildet, um ansprechend auf das Kamerasignal 335 ein Abschaltsignal 345 zum Abschalten der Milchschaumerzeugungseinrichtung 105 bereitzustellen, wenn das Kamerasignal 335 einen Dampfzustand repräsentiert, in dem ein Referenzpunkt des Ausgabebereichs 130 von der Kameraeinrichtung 330 nicht mehr erfassbar ist. Lediglich beispielhaft entspricht der Referenzpunkt in diesem Ausführungsbeispiel einem Gefäß 125, das im Ausgabebereich 130 angeordnet ist. Der Dampfzustand ist erreicht, sobald der Milchbehälter 115 leer ist und aufgrund dessen eine von der Milchschaumerzeugungseinrichtung 105 erzeugte Dampfwolke ungleichmäßig und undurchsichtig ist. Zusätzlich ist der Dampfzustand erreichbar, wenn aus dem Milchbehälter 115 bezogene Milch zu heiß ist. Zu heiße Milch lässt sich nicht mehr aufschäumen, da das Eiweiß denaturiert. Aus den Düsen spritzt und dampft es genauso, wie bei einem leeren Milchgefäß. Zusätzlich riecht und schmeckt das verbrannt, der Milchschaum fällt umgehend zusammen. Während des Dampfzustands ist der Referenzpunkt, das heißt das Gefäß 125, nicht mehr von der Kameraeinrichtung 330 erfassbar. Der Dampfzustand ist unter Verwendung des Kamerasignals 335 an die Steuereinrichtung 340 übermittelbar. Um den Prozess des Milchschäumens abzubrechen, ist die Steuereinrichtung 340 in diesem Ausführungsbeispiel ausgebildet, um das Abschaltsignal an die Pumpe 310 bereitzustellen. Das Aussetzen der Pumpe 310 verhindert, dass trotz leerem Milchbehälter 115 das Gerät weiterhin versucht, Milch anzusaugen und damit das gesamte Gerät bedampft und beschmutzt.

In diesem Ausführungsbeispiel ist die Steuereinrichtung 340 zudem ausgebildet, um ansprechend auf das Kamerasignal 335 ein Warnsignal 350 an eine Warneinheit 355 zum Aktivieren einer Warnmeldung bereitzustellen, wenn das Kamerasignal 335 den Dampfzustand repräsentiert. Lediglich beispielhaft handelt es sich bei der Warnmeldung um eine Signalleuchte, die ausgebildet ist, um ansprechend auf das Warnsignal 350 aufzuleuchten. Zusätzlich zum Erfassen eines Dampfzustands ist die Kameraeinrichtung 330 in diesem Ausführungsbeispiel ausgebildet, um einen im Ausgabebereich 130 ausgegebenen Getränkestrahl zu erfassen, der mittels einer Brühleinheit 360 des Heißgetränkeautomaten 100 erzeugbar ist. Dabei ist die Steuereinrichtung 340 ausgebildet, um ein Reinigungssignal 365 zum Reinigen des Ausgabebereichs 130 bereitzustellen, wenn der Getränkestrahl von einer erwarteten Form abweicht.

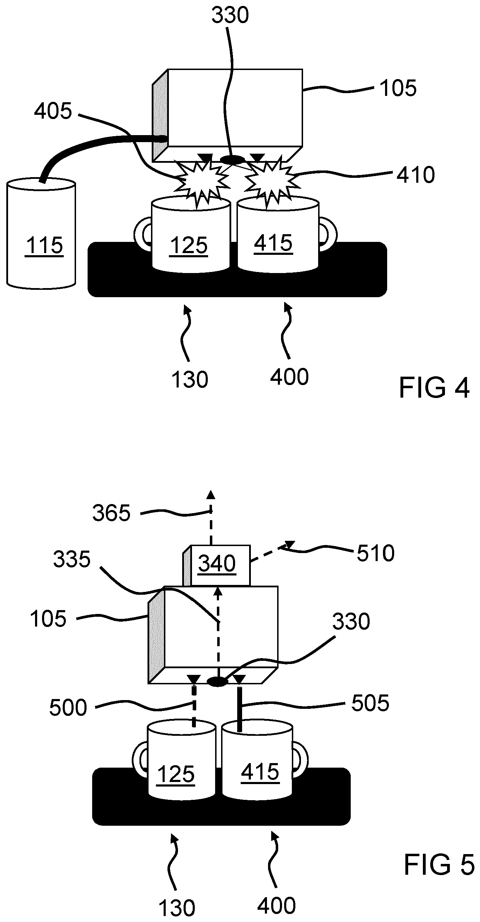

Figur 4 zeigt eine schematische Darstellung einer Milchschaumerzeugungseinrichtung 105 gemäß einem Ausführungsbeispiel. Die hier dargestellt Milchschaumerzeugungseinrichtung 105 entspricht oder ähnelt der in den vorangegangenen Figuren 1 und 3 beschriebenen Milchschaumerzeugungseinrichtung, mit dem Unterschied, dass in der hier gezeigten Darstellung unter der Milchschaumerzeugungseinrichtung 105 neben dem Ausgabebereich 130 ein weiterer Ausgabebereich 400 angeordnet ist. Dabei sind in diesem Ausführungsbeispiel beide Ausgabebereiche 130, 400 gleichzeitig von der Kameraeinrichtung 330 erfassbar. In der hier gezeigten Darstellung ist die Milchschaumerzeugungseinrichtung 105 in einem Dampfzustand abgebildet, in dem aufgrund eines leeren Milchbehälters 115 eine Dampfwolke 405 im Ausgabebereich 130 angeordnet ist und eine weitere Dampfwolke 410 im weiteren Ausgabebereich 400. Wegen der undurchsichtigen Dampfwolken 405, 410 sind ein im Ausgabebereich 130 angeordnetes Gefäß 125 sowie ein im weiteren Ausgabebereich 400 angeordnetes weiteres Gefäß 415 nicht mehr von der Kameraeinrichtung 330 erfassbar. Dabei entspricht lediglich beispielshaft das Gefäß 125 einem Referenzpunkt des Ausgabebereichs 130 und das weitere Gefäß 415 entspricht einem weiteren Referenzpunkt des weiteren Ausgabebereichs 400. Die Kameraeinrichtung 330 ist in diesem Ausführungsbeispiel ausgebildet, um das in der vorangegangenen Figur 3 beschriebene Kamerasignal bereitzustellen, das lediglich beispielhaft den erfassten Dampfzustand in beiden Ausgabebereichen 130, 400 repräsentiert.

Figur 5 zeigt eine schematische Darstellung einer Milchschaumerzeugungseinrichtung 105 gemäß einem Ausführungsbeispiel. Die hier dargestellt Milchschaumerzeugungseinrichtung 105 entspricht oder ähnelt der in den vorangegangenen Figuren 1, 3 und 4 beschriebenen Milchschaumerzeugungseinrichtung. Dabei ist unter der Milchschaumerzeugungseinrichtung 105 sowohl ein Ausgabebereich 130 als auch ein weiterer Ausgabebereich 400 angeordnet, die beide von der Kameraeinrichtung 330 erfassbar sind. In der hier gezeigten Darstellung erfasst die Kameraeinrichtung 330 einen Vorgang des Ausgebens eines Getränkestrahls 500 in ein im Ausgabebereich 130 angeordnetes Gefäß 125 sowie einen Vorgang des Ausgebens eines weiteren Getränkestrahls 505 in ein im weiteren Ausgabebereich 400 angeordnetes weiteres Gefäß 415. Die Kameraeinrichtung 330 ist in diesem Ausführungsbeispiel ausgebildet, um die Form der erfassten Getränkestrahlen 500, 505 unter Verwendung des Kamerasignals 335 an die Steuereinrichtung 340 zu übermitteln. In der hier gezeigten Darstellung weicht der Getränkestrahlen 500 von einer erwarteten Form ab und ist als tröpfelnder Getränkestrahl erfasst. Die Steuereinrichtung 340 ist ausgebildet, um ansprechend auf das den tröpfelnden Getränkestrahl 500 repräsentierende Kamerasignal 335 ein Reinigungssignal 365 zum Reinigen des Ausgabebereichs 130 bereitzustellen. Zudem ist die Steuereinrichtung 340 in diesem Ausführungsbeispiel ausgebildet, um ein Korrektursignal 510 bereitzustellen, wenn sowohl der Getränkestrahl 500 als auch der weitere Getränkestrahl 505 von einer erwarteten Form abweichen. Ansprechend auf das Korrektursignal 510 ist der Heißgetränkeautomat lediglich beispielhaft ausgebildet, um mindestens einen Brühparameter automatisch zu korrigieren. Das Gerät erkennt also in diesem Ausführungsbeispiel Mängel in den Brühparametern durch schlechten Kaffeefluss und kann die Parameter selbstständig nachregulieren. In einem anderen Ausführungsbeispiel kann ansprechend auf das Korrektursignal statt einer automatischen Korrektur auch ein Hinweis an einen Nutzer ausgegeben werden, die eingestellte Mahlmenge beziehungsweise den Mahlgrad zu überprüfen.

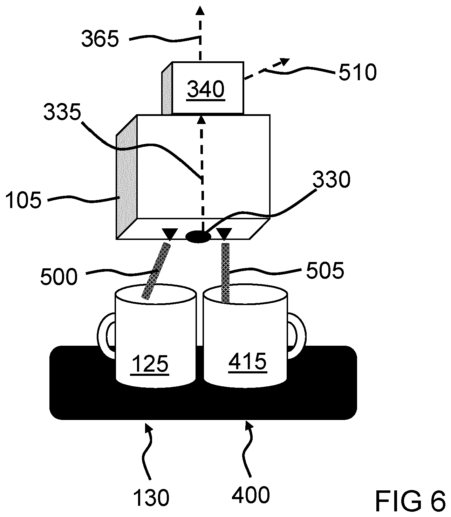

Figur 6 zeigt eine schematische Darstellung einer Milchschaumerzeugungseinrichtung 105 gemäß einem Ausführungsbeispiel. Die hier dargestellt Milchschaumerzeugungseinrichtung 105 entspricht oder ähnelt der in den vorangegangenen Figuren 1, 3, 4 und 5 beschriebenen Milchschaumerzeugungseinrichtung. Dabei ist unter der Milchschaumerzeugungseinrichtung 105 sowohl ein Ausgabebereich 130 als auch ein weiterer Ausgabebereich 400 angeordnet, die beide von der Kameraeinrichtung 330 erfassbar sind. In der hier gezeigten Darstellung erfasst die Kameraeinrichtung 330 einen Vorgang des Ausgebens eines Getränkestrahls 500 in ein im Ausgabebereich 130 angeordnetes Gefäß 125 sowie einen Vorgang des Ausgebens eines weiteren Getränkestrahls 505 in ein im weiteren Ausgabebereich 400 angeordnetes weiteres Gefäß 415. Die Kameraeinrichtung 330 ist in diesem Ausführungsbeispiel ausgebildet, um die Form der erfassten Getränkestrahlen 500, 505 unter Verwendung des Kamerasignals 335 an die Steuereinrichtung 340 zu übermitteln. In der hier gezeigten Darstellung weicht der Getränkestrahlen 500 von einer vorgegebenen Fließrichtung ab und ist als schiefer Getränkestrahl erfasst. Die Steuereinrichtung 340 ist ausgebildet, um ansprechend auf das den schiefen Getränkestrahl 500 repräsentierende Kamerasignal 335 ein Reinigungssignal 365 zum Reinigen des Ausgabebereichs 130 bereitzustellen. Zudem ist die Steuereinrichtung 340 in diesem Ausführungsbeispiel ausgebildet, um ein Korrektursignal 510 bereitzustellen, wenn sowohl der Getränkestrahl 500 als auch der weitere Getränkestrahl 505 von einer erwarteten Fließrichtung abweichen. Ansprechend auf das Korrektursignal 510 ist der Heißgetränkeautomat lediglich beispielhaft ausgebildet, einen Hinweis an einen Nutzer auszugeben, die eingestellte Mahlmenge beziehungsweise den Mahlgrad zu überprüfen.

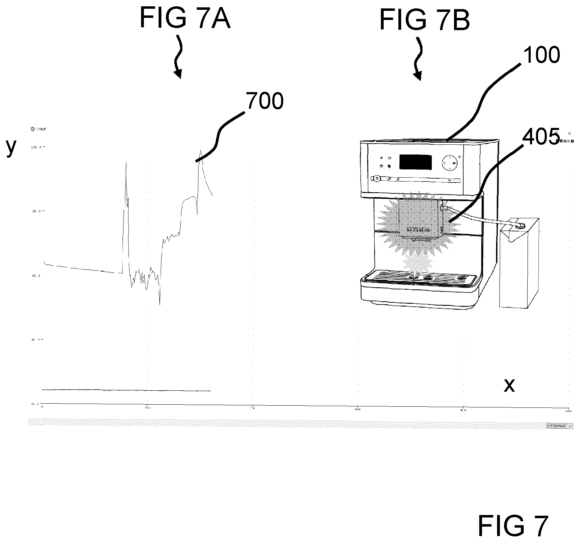

Figur 7 zeigt ein Diagramm eines Ausführungsbeispiels eines Vorgangs 700 des Zubereitens von Milchschaum. Dabei ist der Vorgang 700 als Diagramm in der Teilfigur 7A auf der linken Seite der Figur dargestellt, während in der Teilfigur 7B auf der rechten Seite ein Heißgetränkeautomat 100 abgebildet ist, in dem der Vorgang 700 durchführbar ist. Der hier dargestellte Heißgetränkeautomat 100 entspricht oder ähnelt dem in den vorangegangenen Figuren 1 und 2 beschrieben Heißgetränkeautomaten. Im Diagramm der Teilfigur 7A entspricht die x-Achse der Zeit des Vorgangs 700 in Sekunden und die y-Achse der verwendeten Temperatur in Grad Celsius. In der hier gezeigten Darstellung wird Milch auf lediglich beispielhaft 65°C erhitzt und nach etwa 60 Sekunden mit Wasserdampf vermischt, um Milchschaum zuzubereiten. Nach etwa 120 Sekunden ist die Milch in diesem Ausführungsbeispiel aufgebraucht, wodurch nur noch Luft und Dampf miteinander vermischt werden. Als Folge beginnt das Gerät zu spritzen, zu fauchen und unkontrolliert zu bedampfen, was in der Teilfigur 7B durch die abgebildete Dampfwolke 405 dargestellt ist. In einem anderen Ausführungsbeispiel kann ein Verfahren, wie es in der vorangegangenen Figur 2 beschrieben wurde, angewendet werden, um den Vorgang zu unterbrechen und ein unkontrolliertes Bedampfen der Heißgetränkeautomaten zu vermeiden.

## Patentansprüche

1. Verfahren (200) zum Betreiben eines Heißgetränkeautomaten (100) mit einer Milchschaumerzeugungseinrichtung (105) zum Erzeugen von Milchschaum, wobei das Verfahren (200) durch folgende Schritte gekennzeichnet ist:
Erfassen (205) eines Vorgangs an einem Ausgabebereich (130) des Heißgetränkeautomaten (100) mittels einer Kameraeinrichtung (330), die am Ausgabebereich (130) angeordnet und ausgebildet ist, um Bilder des Ausgabebereichs (130) aufzunehmen;
Ausgeben (210) eines Kamerasignals (335) an eine Steuereinrichtung (340), wobei das Kamerasignal (335) einen am Ausgabebereich (130) durchgeführten Vorgang repräsentiert; und
Bereitstellen (215) eines Abschaltsignals (345) zum Abschalten der Milchschaumerzeugungseinrichtung (105) ansprechend auf das Kamerasignal (335), wenn das Kamerasignal (335) einen Dampfzustand abbildet, in dem ein Referenzpunkt (125) des Ausgabebereichs (130) von der Kameraeinrichtung (330) nicht mehr erfassbar und/oder erkennbar ist.

2. Verfahren (200) gemäß Anspruch 1, wobei im Schritt (215) des Bereitstellens ein Warnsignal (350) zum Aktivieren einer Warnmeldung bereitgestellt wird, wenn das Kamerasignal (335) den Dampfzustand abbildet.

3. Verfahren (200) gemäß einem der vorangegangenen Ansprüche, wobei im Schritt (205) des Erfassens ein Getränkestrahl (500) erfasst wird und wobei im Schritt (215) des Bereitstellens ein Reinigungssignal (365) zum Reinigen des Ausgabebereichs (130) bereitgestellt wird, wenn der Getränkestrahl (500) von einer erwarteten Form abweicht.

4. Verfahren (200) gemäß Anspruch 3, wobei das Reinigungssignal (365) bereitgestellt wird, wenn ein tröpfelnder Getränkestrahl (500) erfasst wird.

5. Verfahren (200) gemäß Anspruch 3 oder 4, wobei das Reinigungssignal (365) bereitgestellt wird, wenn der erfasste Getränkestrahl (500) von einer vorgegebenen und/oder erwarteten Fließrichtung abweicht.

6. Verfahren (200) gemäß einem der vorangegangenen Ansprüche, wobei im Schritt (205) des Erfassens ein weiterer Ausgabebereich (400) des Heißgetränkeautomaten (100) mittels der Kameraeinrichtung (330) erfasst wird, wobei im Schritt (210) des Ausgebens das Kamerasignal (335) einen am Ausgabebereich (130) und/oder am weiteren Ausgabebereich (400) durchgeführten Vorgang repräsentiert, und wobei im Schritt (215) des Bereitstellens das Abschaltsignals (345) bereitgestellt wird, wenn das Kamerasignal (335) den Dampfzustand abbildet, in dem der Referenzpunkt (125) des Ausgabebereichs (130) und/oder ein weiterer Referenzpunkt (415) des weiteren Ausgabebereichs (400) von der Kameraeinrichtung (330) nicht mehr erfassbar und/oder erkennbar ist.

7. Verfahren (200) gemäß einem der vorangegangenen Ansprüche, wobei im Schritt (215) des Bereitstellens ein Korrektursignal (510) zum Korrigieren mindestens eines Brühparameters bereitgestellt wird, wenn der von der Kameraeinrichtung (330) erfasste Getränkestrahl (500) und ein im weiteren Ausgabebereich (400) erfasster weiterer Getränkestrahl (505) von einer erwarteten Form abweichen.

8. Heißgetränkeautomat (100) mit einer Milchschaumerzeugungseinrichtung (105) zum Erzeugen von Milchschaum, wobei der Heißgetränkeautomat (100) folgende Merkmale aufweist:
eine Kameraeinrichtung (330), die an einem Ausgabebereich (130) zum Ausgeben eines Getränkestrahls (500) angeordnet und ausgebildet ist, um Bilder des Ausgabebereichs (130) aufzunehmen, wobei die Kameraeinrichtung (330) ausgebildet ist, um einen am Ausgabebereich (130) durchgeführten Vorgang zu erfassen und ein den Vorgang repräsentierendes Kamerasignal (335) bereitzustellen;
**gekennzeichnet durch**
eine Steuereinrichtung (340), die ausgebildet ist, um ansprechend auf das Kamerasignal (335) ein Abschaltsignal (345) zum Abschalten der Milchschaumerzeugungseinrichtung (105) bereitzustellen, wenn das Kamerasignal (335) einen Dampfzustand abbildet, in dem ein Referenzpunkt (125) des Ausgabebereichs (130) von der Kameraeinrichtung (330) nicht mehr erfassbar und/oder erkennbar ist.

9. Heißgetränkeautomat (100) nach Anspruch 8, wobei die Steuereinrichtung (340) dazu ausgebildet ist, um die Schritte (205, 210, 215) des Verfahrens gemäß einem der Ansprüche 1 bis 7 auszuführen.

10. Computer-Programmprodukt mit Programmcode zur Durchführung des Verfahrens (200) nach einem der vorangegangenen Ansprüche 1 bis 7, wenn das Computer-Programmprodukt auf einer Steuereinrichtung (340) eines Heißgetränkeautomaten (100) gemäß Anspruch 8 oder 9 ausgeführt wird.

11. Maschinenlesbares Speichermedium, auf dem das Computerprogramm nach Anspruch 10 gespeichert ist.

## Claims

1. Method (200) for operating a hot beverage machine (100) comprising a milk foam generating device (105) for generating milk foam, the method (200) being **characterised by** the following steps:
detecting (205) a process at a dispensing region (130) of the hot beverage machine (100) by means of a camera device (330) arranged at the dispensing region (130) and designed to record images of the dispensing region (130);
outputting (210) a camera signal (335) to a control device (340), the camera signal (335) representing a process performed at the dispensing region (130); and
providing (215) a switch-off signal (345) for switching off the milk foam generating device (105) in response to the camera signal (335) if the camera signal (335) depicts a steam state in which a reference point (125) of the dispensing region (130) can no longer be detected and/or recognised by the camera device (330).

2. Method (200) according to claim 1, wherein in the step (215) of providing, a warning signal (350) is provided for activating a warning message if the camera signal (335) depicts the steam state.

3. Method (200) according to either of the preceding claims, wherein in the step (205) of detecting, a beverage jet (500) is detected and wherein in the step (215) of providing, a cleaning signal (365) for cleaning the dispensing region (130) is provided if the beverage jet (500) deviates from an expected shape.

4. Method (200) according to claim 3, wherein the cleaning signal (365) is provided if a dripping beverage jet (500) is detected.

5. Method (200) according to claim 3 or 4, wherein the cleaning signal (365) is provided if the detected beverage jet (500) deviates from a predetermined and/or expected flow direction.

6. Method (200) according to any of the preceding claims, wherein in the step (205) of detecting, a further dispensing region (400) of the hot beverage machine (100) is detected by means of the camera device (330), wherein in the step (210) of outputting, the camera signal (335) represents a process performed at the dispensing region (130) and/or at the further dispensing region (400), and wherein in the step (215) of providing, the switch-off signal (345) is provided if the camera signal (335) depicts the steam state in which the reference point (125) of the dispensing region (130) and/or a further reference point (415) of the further dispensing region (400) can no longer be detected and/or recognised by the camera device (330).

7. Method (200) according to any of the preceding claims, wherein in the step (215) of providing, a correction signal (510) for correcting at least one brewing parameter is provided if the beverage jet (500) detected by the camera device (330) and a further beverage jet (505) detected in the further dispensing region (400) deviate from an expected shape.

8. Hot beverage machine (100) comprising a milk foam generating device (105) for generating milk foam, the hot beverage machine (100) having the following features:
a camera device (330) arranged at a dispensing region (130) for dispensing a beverage jet (500) and designed to record images of the dispensing region (130), the camera device (330) being designed to detect a process performed at the dispensing region (130) and to provide a camera signal (335) representing the process;
**characterised by**
a control device (340) which is designed to provide, in response to the camera signal (335), a switch-off signal (345) for switching off the milk foam generating device (105) if the camera signal (335) depicts a steam state in which a reference point (125) of the dispensing region (130) can no longer be detected and/or recognised by the camera device (330).

9. Hot beverage machine (100) according to claim 8, wherein the control device (340) is designed to carry out the steps (205, 210, 215) of the method according to any of claims 1 to 7.

10. Computer program product comprising program code for carrying out the method (200) according to any of the preceding claims 1 to 7 when the computer program product is run on a control device (340) of a hot beverage machine (100) according to claim 8 or 9.

11. Machine-readable storage medium on which the computer program according to claim 10 is stored.

## Revendications

1. Procédé (200) permettant de faire fonctionner un distributeur automatique de boissons chaudes (100) comportant un dispositif de production de mousse de lait (105) permettant de produire de la mousse de lait, dans lequel le procédé (200) est **caractérisé par** les étapes suivantes :
détection (205) d'une opération au niveau d'une zone de distribution (130) du distributeur automatique de boissons chaudes (100) au moyen d'un dispositif formant caméra (330) qui est disposé au niveau de la zone de distribution (130) et qui est configuré pour enregistrer des images de la zone de distribution (130) ;
sortie (210) d'un signal de caméra (335) vers un dispositif de commande (340), dans lequel le signal de caméra (335) représente une opération effectuée au niveau de la zone de distribution (130) ; et
fourniture (215) d'un signal d'arrêt (345) pour l'arrêt du dispositif de production de mousse de lait (105) en réponse au signal de caméra (335) lorsque le signal de caméra (335) représente un état de vapeur dans lequel un point de référence (125) de la zone de distribution (130) ne peut plus être détecté et/ou reconnu par le dispositif formant caméra (330).

2. Procédé (200) selon la revendication 1, dans lequel, à l'étape (215) de fourniture, un signal d'avertissement (350) est fourni pour l'activation d'un message d'avertissement lorsque le signal de caméra (335) représente l'état de vapeur.

3. Procédé (200) selon l'une des revendications précédentes, dans lequel, à l'étape (205) de détection, un jet de boisson (500) est détecté et dans lequel, à l'étape (215) de fourniture, un signal de nettoyage (365) est fourni pour le nettoyage de la zone de distribution (130) lorsque le jet de boisson (500) s'écarte d'une forme attendue.

4. Procédé (200) selon la revendication 3, dans lequel le signal de nettoyage (365) est fourni lorsqu'un jet de boisson (500) en gouttelettes est détecté.

5. Procédé (200) selon la revendication 3 ou 4, dans lequel le signal de nettoyage (365) est fourni lorsque le jet de boisson (500) détecté s'écarte d'une direction d'écoulement prédéterminée et/ou attendue.

6. Procédé (200) selon l'une des revendications précédentes, dans lequel, à l'étape (205) de détection, une autre zone de distribution (400) du distributeur automatique de boissons chaudes (100) est détectée au moyen du dispositif formant caméra (330), dans lequel, à l'étape (210) de sortie, le signal de caméra (335) représente une opération effectuée au niveau de la zone de distribution (130) et/ou au niveau de l'autre zone de distribution (400), et dans lequel, à l'étape (215) de fourniture, le signal d'arrêt (345) est fourni lorsque le signal de caméra (335) représente l'état de vapeur dans lequel le point de référence (125) de la zone de distribution (130) et/ou un autre point de référence (415) de l'autre zone de distribution (400) ne peuvent plus être détectés et/ou reconnus par le dispositif formant caméra (330).

7. Procédé (200) selon l'une des revendications précédentes, dans lequel, à l'étape (215) de fourniture, un signal de correction (510) est fourni pour la correction d'au moins un paramètre d'infusion lorsque le jet de boisson (500) détecté par le dispositif formant caméra (330) et un autre jet de boisson (505) détecté dans l'autre zone de distribution (400) diffèrent d'une forme attendue.

8. Distributeur automatique de boissons chaudes (100) comportant un dispositif de production de mousse de lait (105) pour la production de mousse de lait, dans lequel le distributeur automatique de boissons chaudes (100) présente les caractéristiques suivantes :
un dispositif formant caméra (330) disposé au niveau d'une zone de distribution (130) pour la distribution d'un jet de boisson (500) et configuré pour enregistrer des images de la zone de distribution (130), dans lequel le dispositif formant caméra (330) est configuré pour détecter une opération effectuée au niveau de la zone de distribution (130) et pour fournir un signal de caméra (335) représentant l'opération ;
**caractérisé par**
un dispositif de commande (340) qui est configuré pour fournir, en réponse au signal de caméra (335), un signal d'arrêt (345) pour l'arrêt du dispositif de production de mousse de lait (105) lorsque le signal de caméra (335) représente un état de vapeur dans lequel un point de référence (125) de la zone de distribution (130) ne peut plus être détecté et/ou reconnu par le dispositif formant caméra (330).

9. Distributeur automatique de boissons chaudes (100) selon la revendication 8, dans lequel le dispositif de commande (340) est configuré pour exécuter les étapes (205, 210, 215) du procédé selon l'une des revendications 1 à 7.

10. Produit-programme informatique comportant un code de programme pour la réalisation du procédé (200) selon l'une des revendications 1 à 7 précédentes lorsque le produit-programme informatique est exécuté sur un dispositif de commande (340) d'un distributeur automatique de boissons chaudes (100) selon la revendication 8 ou 9.

11. Support de stockage lisible par machine sur lequel est stocké le programme informatique selon la revendication 10.
